(19) Europäisches Patentamt
European Patent Office
Office européen des brevets

(11) **EP 4 687 078 A1**

(12) **EUROPEAN PATENT APPLICATION**

(43) Date of publication:
**04.02.2026 Bulletin 2026/06**

(21) Application number: **25190058.5**

(22) Date of filing: **17.07.2025**

(51) International Patent Classification (IPC):
*G06N 3/098* (2023.01)

(52) Cooperative Patent Classification (CPC):
**G06N 3/098;** G06N 20/00

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **31.07.2024 FI 20245941**

(71) Applicant: **Nokia Solutions and Networks Oy 02610 Espoo (FI)**

(72) Inventors:
• **ATLI, Buse**
c/o Nokia Solutions and Networks Oy, Espoo (FI)
• **SABZEVARI, Maryam**
c/o Nokia Solutions and Networks Oy, Espoo (FI)
• **LIU, Shushu**
**Espoo (FI)**

(74) Representative: **Nokia EPO representatives**
**Nokia Technologies Oy**
**Karakaari 7**
**02610 Espoo (FI)**

(54) **APPARATUS, METHOD, AND SYSTEM FOR PROVIDING SIGNATURE-BASED MACHINE UNLEARNING**

(57) An approach is provided for signature-based machine unlearning. The approach involves, for example, configuring a machine learning model to learn at least one main task and an auxiliary task. The auxiliary task maps at least one signature associated with at least one data provider to at least one identifier associated with the at least one data provider, and the machine learning model is trained using training data labeled with the at least one signature. The approach also involves calcu-
lating at least one data structure representing a sensitivity of at least one parameter of the machine learning model to the training data associated with the least one data provider. The approach further involves updating one or more model parameters of the machine learning model based on the at least one data structure to perform a machine unlearning of the training data associated with the least one data provider indicated in an unlearning request.

FIG. 1

**Description**

FIELD

The disclosed subject matter generally relates to machine unlearning, data privacy, and continual learning.

BACKGROUND

As machine learning (ML) becomes more prevalent, consumers and data providers express more concerns about the privacy and misuse of their datasets. Therefore, recent data protection regulations (e.g., GDPR: General Data Protection Regulation, CCPA: California Consumer Privacy Act) introduced new laws that protect the privacy of users by enabling them "the right to be forgotten." These laws compel data deletion upon request: the specified training samples must be discarded from both the training set (if stored) and trained model(s). However, a simple deletion of samples from the training data and the retraining of ML models from scratch with updated data is an expensive and resource-intensive process, particularly with complex ML models and large datasets.

SOME EXAMPLE EMBODIMENTS

Therefore, there is a need for machine unlearning that can remove the influence of requested training samples from a machine learning (ML) model for individual consumers or data providers without retraining models from scratch.

According to one example embodiment, an apparatus comprises means for configuring a ML model to learn at least one main task and an auxiliary task. The auxiliary task maps at least one signature associated with at least one data provider to at least one identifier associated with the at least one data provider, and the ML model is trained using training data labeled with the at least one signature. The apparatus also comprises means for calculating at least one data structure (e.g., a data structure that represents an information metric such as a Fisher Information Matrix (FIM) or equivalent statistical measure of information sensitivity) representing a sensitivity of at least one parameter of the ML model to the training data associated with the least one data provider. The apparatus further comprises updating one or more model parameters of the ML model based on the at least one data structure (e.g., representing an information metric) to perform a machine unlearning of the training data associated with the least one data provider indicated in an unlearning request.

According to another embodiment, an apparatus comprises at least one processor, and at least one memory storing instructions that, when executed by the at least one processor, cause the apparatus at least to configure a ML model to learn at least one main task and an auxiliary task. The auxiliary task maps at least one signature associated with at least one data provider to at least one identifier associated with the at least one data provider, and the ML model is trained using training data labeled with the at least one signature. The apparatus is also caused to calculate at least one data structure (e.g., a data structure that represents an information metric such as a Fisher Information Matrix (FIM) or equivalent statistical measure of information sensitivity) representing a sensitivity of at least one parameter of the ML model to the training data associated with the least one data provider. The apparatus is further cause to update one or more model parameters of the ML model based on the at least one data structure (e.g., representing an information metric) to perform a machine unlearning of the training data associated with the least one data provider indicated in an unlearning request.

According to another embodiment, a method comprises configuring a ML model to learn at least one main task and an auxiliary task. The auxiliary task maps at least one signature associated with at least one data provider to at least one identifier associated with the at least one data provider, and the ML model is trained using training data labeled with the at least one signature. The method also comprises calculating at least one data structure (e.g., a data structure that represents an information metric such as a Fisher Information Matrix (FIM) or equivalent statistical measure of information sensitivity) representing a sensitivity of at least one parameter of the ML model to the training data associated with the least one data provider. The method further comprises updating one or more model parameters of the ML model based on the at least one data structure (e.g., representing an information metric) to perform a machine unlearning of the training data associated with the least one data provider indicated in an unlearning request.

According to another embodiment, a computer program comprising instructions which, when executed by an apparatus, cause the apparatus to configure a ML model to learn at least one main task and an auxiliary task. The auxiliary task maps at least one signature associated with at least one data provider to at least one identifier associated with the at least one data provider, and the ML model is trained using training data labeled with the at least one signature. The apparatus is also caused to calculate at least one data structure (e.g., a data structure that represents an information metric such as a Fisher Information Matrix (FIM) or equivalent statistical measure of information sensitivity) representing a sensitivity of at least one parameter of the ML model to the training data associated with the least one data provider. The apparatus is further cause to update one or more model parameters of the ML model based on the at least one data structure (e.g., representing an information metric) to perform a machine unlearning of the training data associated with the least one data provider indicated in an unlearning request.

According to another embodiment, a computer program comprises instructions for causing an apparatus to configure a ML model to learn at least one main task and an auxiliary task. The auxiliary task maps at least one signature associated with at least one data provider to at least one identifier associated with the at least one data provider, and the ML model is trained using training data labeled with the at least one signature. The apparatus is also caused to calculate at least one data structure (e.g., a data structure that represents an information metric such as a Fisher Information Matrix (FIM) or equivalent statistical measure of information sensitivity) representing a sensitivity of at least one parameter of the ML model to the training data associated with the least one data provider. The apparatus is further cause to update one or more model parameters of the ML model based on the at least one data structure (e.g., representing an information metric) to perform a machine unlearning of the training data associated with the least one data provider indicated in an unlearning request.

According to another embodiment, a non-transitory computer-readable storage medium comprising program instructions that, when executed by an apparatus, cause the apparatus to configure a ML model to learn at least one main task and an auxiliary task. The auxiliary task maps at least one signature associated with at least one data provider to at least one identifier associated with the at least one data provider, and the ML model is trained using training data labeled with the at least one signature. The apparatus is also caused to calculate at least one information metric (e.g., a data structure that represents an information metric such as a Fisher Information Matrix (FIM) or equivalent statistical measure of information sensitivity) representing a sensitivity of at least one parameter of the ML model to the training data associated with the least one data provider. The apparatus is further cause to update one or more model parameters of the ML model based on the at least one data structure (e.g., representing an information metric) to perform a machine unlearning of the training data associated with the least one data provider indicated in an unlearning request.

According to one example embodiment, an apparatus comprises ML circuitry configured to cause a ML model to learn at least one main task and an auxiliary task. The auxiliary task maps at least one signature associated with at least one data provider to at least one identifier associated with the at least one data provider, and the ML model is trained using training data labeled with the at least one signature. The ML circuitry is also caused to calculate at least one information metric (e.g., a data structure that represents an information metric such as a Fisher Information Matrix (FIM) or equivalent statistical measure of information sensitivity) representing a sensitivity of at least one parameter of the ML model to the training data associated with the least one data provider. The ML circuitry is further cause to update one or more model parameters of the ML model based on the at least one data structure (e.g., representing an information metric) to perform a machine unlearning of the training data associated with the least one data provider indicated in an unlearning request.

According to a further embodiment, a device comprises at least one processor; and at least one memory including a computer program code for one or more programs, the at least one memory and the computer program code configured to, with the at least one processor, cause the device to configure a ML model to learn at least one main task and an auxiliary task. The auxiliary task maps at least one signature associated with at least one data provider to at least one identifier associated with the at least one data provider, and the ML model is trained using training data labeled with the at least one signature. The device is also caused to calculate at least one information metric (e.g., a data structure that represents an information metric such as a Fisher Information Matrix (FIM statistical measure of information sensitivity) or equivalent) representing a sensitivity of at least one parameter of the ML model to the training data associated with the least one data provider. The device is further cause to update one or more model parameters of the ML model based on the at least one data structure (e.g., representing an information metric) to perform a machine unlearning of the training data associated with the least one data provider indicated in the unlearning request.

In addition, for various example embodiments of the invention, the following is applicable: a method comprising facilitating a processing of and/or processing (1) data and/or (2) information and/or (3) at least one signal, the (1) data and/or (2) information and/or (3) at least one signal based, at least in part, on (or derived at least in part from) any one or any combination of methods (or processes) disclosed in this application as relevant to any embodiment of the invention.

For various example embodiments of the invention, the following is also applicable: a method comprising facilitating access to at least one interface configured to allow access to at least one service, the at least one service configured to perform any one or any combination of network or service provider methods (or processes) disclosed in this application.

For various example embodiments of the invention, the following is also applicable: a method comprising facilitating creating and/or facilitating modifying (1) at least one device user interface element and/or (2) at least one device user interface functionality, the (1) at least one device user interface element and/or (2) at least one device user interface functionality based, at least in part, on data and/or information resulting from one or any combination of methods or processes disclosed in this application as relevant to any embodiment of the invention, and/or at least one signal resulting from one or any combination of methods (or processes) disclosed in this application as relevant to any embodiment of the invention.

For various example embodiments of the invention, the following is also applicable: a method comprising creating and/or modifying (1) at least one device user interface element and/or (2) at least one device user interface functionality, the (1) at least one device user interface element and/or (2) at least one device user interface functionality based at least in part on data and/or information resulting from one or any combination of methods (or processes) disclosed in this application as relevant to any embodiment of the invention, and/or at least one signal resulting from one or any combination of methods (or processes) disclosed in this application as relevant to any embodiment of the invention.

In various example embodiments, the methods (or processes) can be accomplished on the service provider side or on the mobile device side or in any shared way between service provider and mobile device with actions being performed on both sides.

For various example embodiments, the following is applicable: An apparatus comprising means for performing a method of the claims.

According to some aspects, there is provided the subject matter of the independent claims. Some further aspects are defined in the dependent claims.

Still other aspects, features, and advantages of the invention are readily apparent from the following detailed description, simply by illustrating a number of particular embodiments and implementations, including the best mode contemplated for carrying out the invention. The invention is also capable of other and different embodiments, and its several details can be modified in various obvious respects, all without departing from the spirit and scope of the invention. Accordingly, the drawings and description are to be regarded as illustrative in nature, and not as restrictive.

BRIEF DESCRIPTION OF THE DRAWINGS

The example embodiments of the invention are illustrated by way of examples, and not by way of limitation, in the figures of the accompanying drawings:

FIG. 1 is a diagram of a system capable of providing signature-based machine unlearning, according to one example embodiment;

FIG. 2 is a diagram of a continual learning model, according to one example embodiment;

FIGs. 3A and 3B are diagrams of an example of task interference in multi-task learning, according to one example.

FIG. 4 is a diagram of components of a model manager, according to one example embodiment;

FIG. 5 is a flowchart of a process for signature-based machine unlearning, according to one example embodiment;

FIG. 6 is a diagram of example signatures for labeling data, according to one example embodiment;

FIG. 7 is a diagram of a model undergoing machine unlearning, according to one example embodiment;

FIG. 8 is a diagram of a model with affected parameters after machine unlearning, according to one example embodiment;

FIGs. 9A-9D are diagrams of a time-sequence diagram for signature-based unlearning for a continual model, according to one example embodiment;

FIG. 10 is a diagram of hardware that can be used to implement example embodiments; and

FIG. 11 is a diagram of a chip set that can be used to implement example embodiments.

DESCRIPTION OF SOME EMBODIMENTS

Examples of a method, apparatus, and computer program for providing signature-based machine unlearning, according to one example embodiment, are disclosed in the following. In the following description, for the purposes of explanation, numerous specific details and examples are set forth to provide a thorough understanding of the embodiments of the invention. It is apparent, however, to one skilled in the art that the embodiments of the invention may be practiced without these specific details or with an equivalent arrangement. In other instances, structures and devices are shown in block diagram form to avoid unnecessarily obscuring the embodiments of the invention.

Reference in this specification to "one embodiment", "one example embodiment", "an "embodiment", or "an example embodiment" means that a particular feature, structure, or characteristic described in connection with the embodiment is included in at least one embodiment of the present disclosure. The appearance of the phrase "in one embodiment" or "in one example embodiment" in various places in the specification are not necessarily all referring to the same example embodiment, nor are separate or alternative example embodiments mutually exclusive of other embodiments. In addition, the embodiments described herein are provided by example, and as such, "one embodiment" can also be used synonymously as "one example embodiment." Further, the terms "a" and "an" herein do not denote a limitation of quantity, but rather denote the presence of at least one of the referenced items. Moreover, various features are described which may be exhibited by some embodiments and not by others. Similarly, various requirements are described which may be requirements for some embodiments but not for other embodiments.

As used herein, "at least one of the following: <a list of two or more elements>," "at least one of <a list of two or more elements>," "<a list of two or more elements> or a combination thereof," and similar wording, where the list of two or more elements are joined by "and" or "or", mean at least any one of the elements, or at least any two or more of the elements, or at least all the elements.

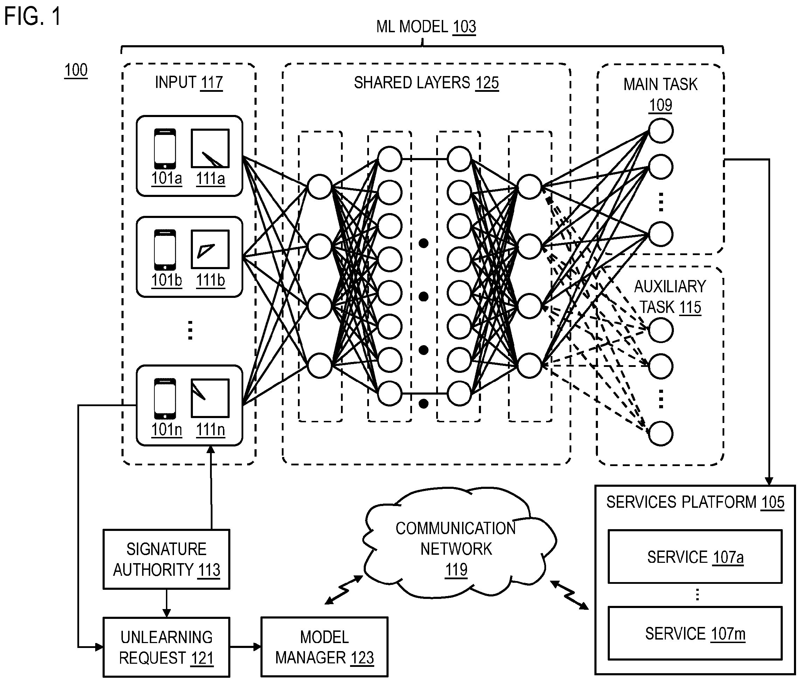

FIG. 1 is a diagram of a system capable of providing signature-based machine unlearning, according to one example embodiment. As noted above, with the growing prevalence of machine learning (ML), consumers and data providers (e.g., user equipment (UE) devices 101a-101n - also collectively referred to as UEs 101) express more concerns about the privacy and misuse of their datasets used in ML applications. Therefore, recent data protection regulations (e.g., GDPR: General Data Protection Regulation, CCPA: California Consumer Privacy Act) introduced new laws that protect the privacy of users by enabling them "the right to be forgotten." These laws compel data deletion upon request, including requiring owners of associated ML models to discard any specified training samples from both the training set (if stored) and trained model(s) (e.g., ML model 103). However, a simple deletion of samples from the training data and the retraining of ML models from scratch with updated data is an expensive process, particularly with complex ML models and large datasets. Machine unlearning solves this problem by removing the influence of requested samples from the ML model without retraining models from scratch.

More specifically, machine unlearning aims to modify the trained model such that it behaves as if it was trained without using the unlearned data (i.e., the data to be deleted upon request) by ensuring either (1) indistinguishability between model distributions, or (2) indistinguishability between output of models. The level of unlearning request also varies in different settings. For example, the deletion request can be (1) sample (item) removal, (2) class removal, (3) feature removal, (4) sequence removal, (5) graph removal (e.g., particular to graph neural networks), (6) task removal, or (7) data provider (e.g., particular to a user or client such as a UE 101 belonging to the user) removal. In one embodiment, the various embodiments described herein consider scenarios where the machine unlearning aims for indistinguishability (e.g., based on model accuracy tests) between output of unlearned and retrained models and the level of unlearning is "data-provider", where each end point (e.g., UE 101 or user thereof) can request eliminating the effect of their data from ML model(s) or where forgetting is necessary due to privacy regulations (e.g., the data provider/UE 101 leaves the system 100).

In one embodiment, the various approaches described consider a scenario in which data providers only make their (private) data available to organizations and enable building ML models in a continual learning fashion. Therefore, data providers do not have any local models on the client side and their data continuously evolve. As used herein, continual learning refers to enabling ML models to integrate new data without explicit retraining. For example, in batch learning based ML, the system has access to a data set which are used to train (fit) an ML model on it. Then the system deploys the model and assumes that the data that the model will see in the future are taken from the same underlying distribution as the training data, and therefore the model can perform a descent prediction. However, unlike this batch learning where a model is trained on a fixed dataset and then deployed, continual learning enables the model to learn from new tasks, while retaining knowledge from previous tasks or experiences. It addresses the challenge of acquiring and retaining knowledge (e.g., stability-plasticity dilemma) in dynamic and evolving environments, while having limited access to past data. Continual learning algorithms are designed to incrementally update the model parameters, adapt to new information, and avoid catastrophic forgetting of previously learned knowledge. This allows the model to stay updated, handle concept drift (e.g., changes of the patterns in different data segments), and efficiently incorporate new data without requiring retraining from the scratch.

At first, the concept of machine unlearning seems to conflict with continual learning, since ML models in continual learning must maintain their performance on both new and old data even if the old data are already discarded. However, if the incoming data belongs to different resources, or users/UEs 101, upon request, an immediate machine unlearning could serve as an effective solution for achieving fairness, privacy protection, and security issues in continual learning.

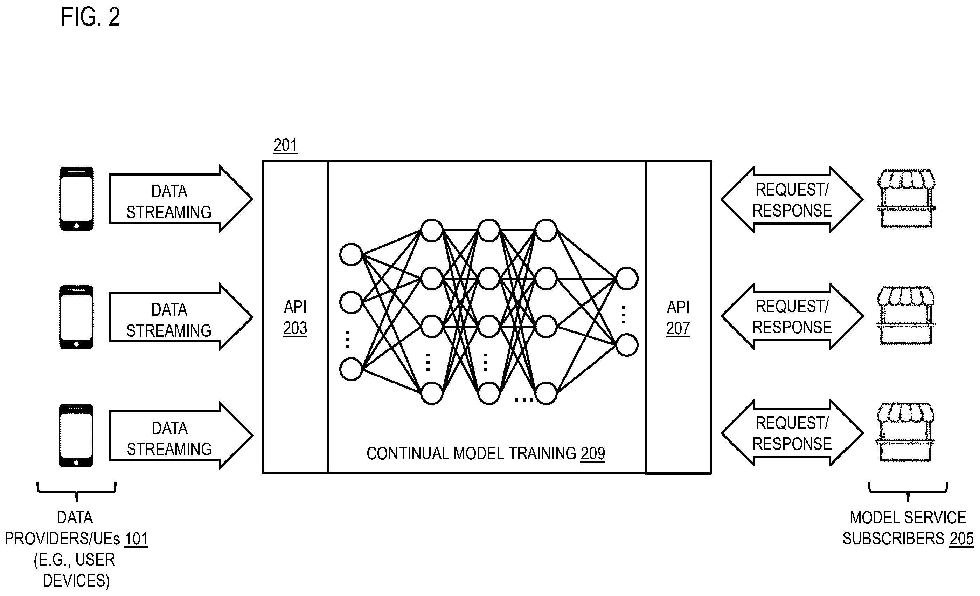

Machine unlearning allows owners to eliminate their data contribution from trained models when concerned about the privacy and misuse of their data, especially when the owner of the data/data provider wants to leave the system and requests to delete their data in any trained models. As shown in FIG. 2, a continual learning model 201 is maintained with training data collected from different user devices (e.g., data providers/UEs 101) as data streams via application programming interface (API) 203 and provides request/response services to model service subscribers 205 (e.g., a services platform 105, one or more services 107a-107m - also collectively referred to as services 107 - of the services platform, etc.) via API 207. An owner of the ML model 201 must remove data provider specific data when one or more of the data providers wants to leave the system and requests the removal of the knowledge in the ML model 201 learned from its data. However, machine unlearning for ML models 201 that use continual model training 209 has been challenging because: 1) no or limited access to old training data for the continual learning model (e.g., because training data is not stored after the training batch is processed); and 2) data from different tasks come in at different and random intervals. Traditional request removal techniques, like sample (item) removal, class removal, feature removal and are highly dependent on the training data being available. Accordingly, these traditional removal techniques are not applicable to continual learning where past training data is not generally available.

To address these technical challenges, the system 100 of FIG. 1 introduces a capability to achieve machine unlearning for continual learning models when, for instance, the data (stream) is not stored after training ML models. By way of example, the various embodiments described herein can be used when the data provider/UE 101 wants to leave the system and requests the removal of the knowledge learned from its data. It is noted that although the various embodiments described herein are discussed with respect to continual learning models, it is contemplated that the embodiments are also applicable to ML models based on batch learning.

More specifically, the various embodiments described herein solve the technical problems described above by incorporating multi-task learning (MTL) and machine unlearning using Fisher Information Matrix (FIM) or an equivalent data structure that represents a sensitivity of the parameters of the ML model 103 to the data (e.g., training or input data associated with a given data provider/UE 101 of interest). As used herein, sensitivity of a parameter of an ML model captures the change in the output function (loss) to changes in the training data, when the parameter is fixed. If the parameter is more sensitive to the output (i.e., to a specific class), then a small change in the input sample will make a bigger change in the loss measured by a function (e.g., classification loss), compared to less sensitive parameters. Sensitivity of parameters can be measured by different methods, such as but not limited to FIM, which quantifies the amount of information that the data provides about the parameters. A higher FIM value indicates a higher sensitivity, and vice versa.

By way of example, FIM is used to calculate the amount of information carried by a random, observable variable $x$ about a parameter $\theta$, where $x \in X$ sampled from the input space $X$, and the distribution of x is parameterized by $\theta$. In DNNs, FIM for model parameters $\theta$ can be calculated using input samples $x \in X$, their corresponding labels $y \in Y$ that belongs to an output space $Y$, and $\theta$ parameterizes the joint distribution of $(X, Y)$. In practice, FIM in DNNs is calculated by taking the second derivative (i.e., the gradient of the gradient) of a loss function that DNN is trying to minimize with respect to model parameters $\theta$ using available input output pairs. FIM in DNNs quantify the relative importance of model parameters.

It is noted that FIM is provided as one example of a data structure (e.g., representing an information metric, also referred to as a "sensitivity metric") that can represent the sensitivity of model parameters to data samples from a given data provider/UE 101. "Sensitivity", for example, refers to the degree to which the value of the parameter changes when the data samples change. It is contemplated that other equivalent alternatives can be used according to various embodiments described herein. For example, one alternative to FIM is the gradient outer product (GOP). GOP is defined as the outer product of the gradient of a loss function with respect to the model parameters, averaged over the data distribution. GOP measures the covariance of the gradient components and can capture the correlations among different parameters. Another alternative to FIM is the Hessian matrix. The Hessian matrix is defined as the matrix of second-order partial derivatives of a loss function with respect to the model parameters, evaluated at a given point. The Hessian matrix measures the curvature of the loss function and can capture the local geometry of the parameter space.

In one embodiment, MTL enables a single deep neural network (DNN) model (e.g., ML model 103) to learn two tasks simultaneously. In a typical ML setup, a model is trained to solve a particular problem and focuses on a single task with multiple outputs (e.g., digit classification, intrusion detection, weather forecasting, etc.). Therefore, the performance of a trained model depends on the quality and quantity of the data collected or the lack of it. MTL is proposed to alleviate this problem by sharing the knowledge among different but related tasks. MTL improves the performance of ML models and learning efficiency by collecting more data from a number of tasks that can be learned together (e.g., digit recognition & license plate recognition, anomaly detection & malware classification, humidity & temperature & wind speed forecasting, etc.). In supervised MTL, given $1 \leq i \leq c$ tasks containing $N_i$ training instances with their corresponding labels, the goal of MTL is to learn them together with a single model that shares some of its parameters across multiple tasks and keeping other parameters innate to individual tasks. MTL differs from continual learning (CL): MTL allows joint training of all tasks, while CL enables learning when tasks sequentially arrive to the ML pipeline.

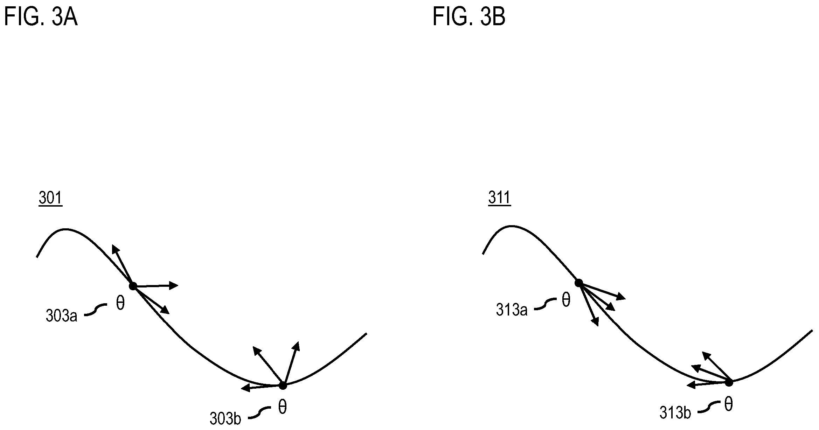

For example, hard parameter sharing in MTL allows ML models to share some of the model parameters (e.g., weights and biases) across all tasks. One hard parameter sharing practice in MTL is to allow bottom layers of deep neural networks (DNNs) to be simultaneously trained for all tasks, while separating layers closer to the output layer of the DNNs for each task. Hard parameter sharing might suffer from task interference (or gradient interference), since each task competes for the same parameters in the shared layers. In DNNs, the gradient represents the rate of change of the loss function with respect to the model parameters. It guides the model's parameter updates during training using optimization algorithms like gradient descent, helping the network learn optimal weights for accurate predictions. Task interference can happen in MTL during the training phase, when the gradient direction of shared parameters for each task points completely different directions and a simple averaging of gradients decreases the performance DNN for non-dominating task(s). An example of task interference is shown in FIGs. 3A and 3B, where example 301 of FIG. 3A illustrates the gradient directions of tasks 303a and 303b pointing in different directions indicating task interference, and example 311 of FIG. 3B illustrates the gradient directions of tasks 313a and 313b pointing in the same direction indicating no task interference.

In one embodiment, MTL methods with hard parameter sharing use various mitigation techniques to solve the task interference problem and balance the learning of dominating and non-dominating tasks. One example mitigation technique to solve the task interference problem for multi-task learning (MTL) in machine learning is to use a weighting scheme that assigns different importance levels to different tasks based on their difficulty or relevance. For example, an adaptive weighting scheme that dynamically adjusts the weights of each task's loss function according to its performance or gradient norm can be used. This way, the tasks that are harder or more important will have a higher influence on the parameter updates of the shared layers, while the tasks that are easier or less important will have a lower influence. Alternatively, they system can use a fixed weighting scheme that assigns predefined weights to each task based on some prior knowledge or domain expertise. Another possible mitigation technique to solve the task interference problem for MTL is to use a regularization method that encourages the model to learn common features across different tasks and avoid overfitting to specific tasks. For example, the system can use a regularization method that penalizes the divergence of the model's outputs or hidden representations for different tasks, such as the contrastive loss or the cross-stitch network. This way, the model will learn to share information and generalize better across tasks, while preserving some task-specific features. Alternatively, the system can use a regularization method that penalizes the complexity or redundancy of the model's parameters for different tasks, such as the group lasso or the orthogonality constraint. This way, the model will learn to use fewer and more independent parameters for each task, reducing the risk of interference and overparameterization.

As shown in FIG. 1, ML model 103 is an MTL model that includes two task components: (1) solving the actual ML problem (e.g., main task 109); and (2) mapping the data provider's (UE 101) secret signature (e.g., signatures 111a-111n - also collectively referred to as signatures 111 - which are provided by signature authority 113 such as but not limited to a model trainer, trusted third party, etc.) to its ID (e.g., auxiliary task 115).

In one embodiment, auxiliary tasks 115 are used for calculating FIM for data-provider specific machine unlearning. The various embodiments described herein achieve machine unlearning at the data-provider level without the need to store training data during continual learning. Achieving machine unlearning at the data-provider level without the need to store training data during continual learning has several technical advantages, such as but not limited to: (1) it preserves the privacy and security of the data providers, who can request to remove their personal data from the ML model 103 without exposing or revealing it to anyone; (2) it reduces the storage and computation costs of the ML model 103, which does not need to keep track of the historical data or retrain the model from scratch after unlearning requests; and (3) it improves the flexibility and scalability of the ML model 103, which can adapt to dynamic changes in the data distribution and the data providers' preferences without compromising its performance or accuracy.

In other words, the various embodiments described herein offer a solution for unlearning in a neural machine learning model 103 trained on inaccessible data (e.g., in a continual learning setup) or wherein past training data is otherwise unavailable or not used any longer, utilizing stream data (e.g., input data 117 streamed from UEs 101 over a communication network 119). Notably, the various embodiments described herein operate independently of any task-specific data or class information. One technical advantage lies in its ability to handle unlearning requests 121 without access to the preceding data intended for removal and by the structural design of the model.

In one embodiment, one or more data providers (e.g., user equipment, UE 101) contribute to training the ML model 103 and send their data samples (input data 107) using trusted communication channels (e.g., a communication network 119) to a central server (e.g., model manager 123) that trains the ML model 103 continuously. The ML model 103 uses deep neural networks (DNNs) as model architecture and it provides ML as a service, such as health monitoring, face recognition, autonomous driving assistance, etc. (e.g., to the services platform 105, services 107, and/or any other component of the system 100). The training of the DNN model 103 follows the continual learning procedure where data samples (e.g., input 117) from each data provider (e.g., UE 101) arrives to the model 103 sequentially and are discarded after the model 103 is updated with new data.

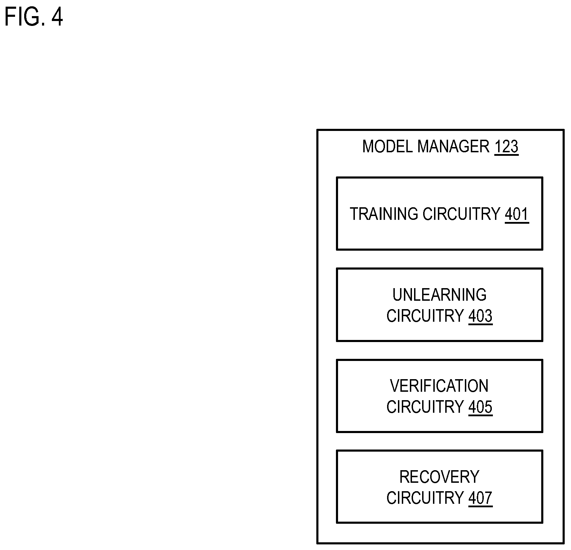

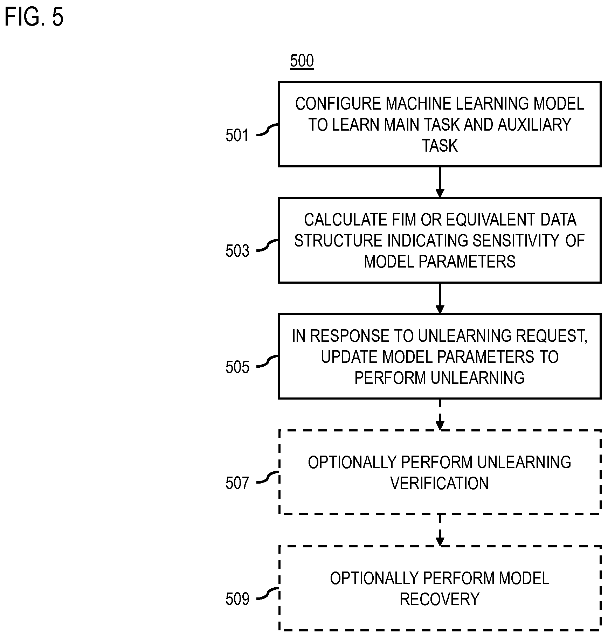

FIG. 4 is a diagram of components of a model manager 123, according to one example embodiment. In one embodiment, the model manager 123 performs the functions and methods associated with, and provides means for providing signature-based machine unlearning according to the various embodiments described herein. As shown in FIG. 4, the model manager 123 includes: (1) training circuitry 401 for training (e.g., via continual learning) the ML model 103, (2) unlearning circuitry 403 for providing data-provider level machine unlearning; (3) verification circuitry 405 for verifying the completeness a machine learning instance; and (4) recovery circuitry 407 for testing and/or retraining the ML model 103 to achieve a target accuracy following machine learning. It is contemplated that the functions of the components/circuitry of the model manager 123 described above may be combined or performed by other components or means of equivalent functionality. The above presented components comprise means for performing the various embodiments and can be implemented in a circuitry, a hardware, a firmware, a software, a chip set, or in any combination thereof. The functions of the components of the model manager 123 are described in more detail below with respect to FIGs. 5-9D

As used in this application, the term "circuitry" may refer to one or more or all of the following:

   (a) hardware-only circuit implementations (such as implementations in only analog and/or digital circuitry) and
   (b) combinations of hardware circuits and software, such as (as applicable):

      (i) a combination of analog and/or digital hardware circuit(s) with software/firmware and
      (ii) any portions of hardware processor(s) with software (including digital signal processor(s)), software, and memory(ies) that work together to cause an apparatus, such as a mobile phone or server, to perform various functions) and

(c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular telecom network device, or other computing or network device. In another embodiment, one or more of the components of the model manager 123 may be implemented as a cloud-based service, local service, native application, or in any combination thereof.

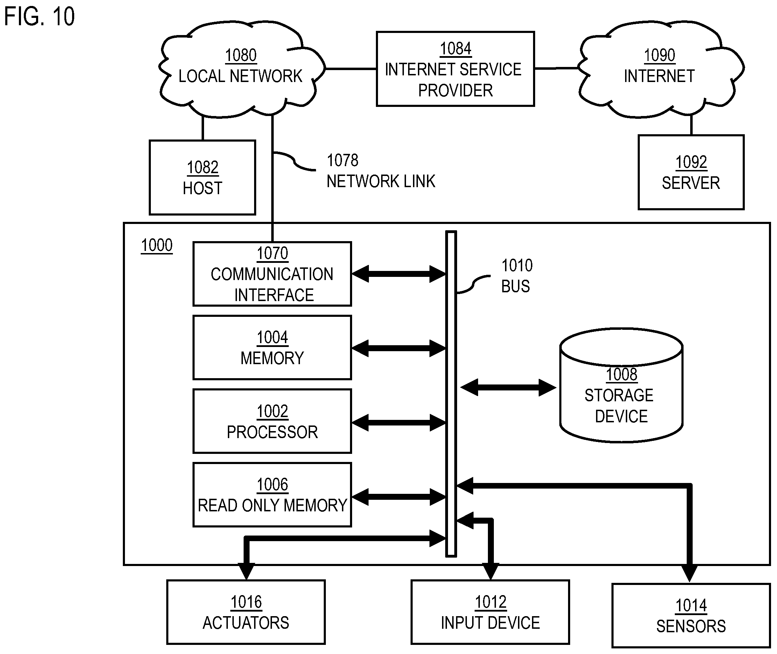

FIG. 5 is a flowchart of a process for signature-based machine unlearning, according to one example embodiment. In one example, the model manager 123 and/or any of its components/circuitry may perform one or more portions of a process 500 and may be implemented in/by various means, for instance, one or more chip sets including a processor and a memory as shown in FIGs. 10 or 1 or in a circuitry, hardware, firmware, software, or in any combination thereof. In one example embodiment, the circuitry includes but is not limited to any component discussed with respect to FIG. 4. As such, the model manager 123 and/or any associated component, apparatus, device, circuitry, system, computer program product, method, and/or non-transitory computer readable medium, or any combination thereof, can provide means for accomplishing various parts of the process 500, as well as means for accomplishing embodiments of other processes described herein. Although the process 500 is illustrated and described as a sequence of steps, it is contemplated that various embodiments of the process 300 may be performed in any order or combination and need not include all of the illustrated steps.

In process 501, the training circuitry 401 comprises means for or performs a method comprising configuring a machine learning model to learn at least one main task and an auxiliary task, wherein the auxiliary task maps at least one signature associated with at least one data provider to at least one identifier associated with the at least one data provider, and wherein the machine learning model is trained using training data labeled with the at least one signature. In one embodiment, the machine learning model is a continual learning model. By way of example, the training data includes, but is not limited to, image data, and wherein the at least one signature is at least one watermark in the image data.

In one embodiment, "configuring" refers to implementing an ML model 103 according to the model architecture illustrated in FIG. 1 in which the ML model 103 is MTL and continual learning. For example, as previously described, the system 100 uses a shared/MTL ML model 103 (DNN) to learn two different tasks simultaneously: (1) a main task 109, and (2) an auxiliary task 115 comprising a Signature-to-ID task (SIG2ID). The main task 105, for instance, remains responsible for the provided ML service (e.g., providing any ML task or service), while the auxiliary SIG2ID task 115 is responsible for mapping a data provider's (UE 101's) signed input samples to its user ID (e.g., with signature and/or ID assigned by the signature authority 113 or equivalent). These two tasks 109 and 115 share deeper layers (e.g., shared layers 125) but use a different final layer for their respective outputs. Signed input samples (e.g., input 117) refer to the combination of unmodified input samples with an additional, unique signature 111 corresponding to ID distributed by the signature authority 113 (e.g., a trusted third party) to data providers/UEs 101 when the data provider/UE 101 to joins the training of the ML model 103. Both the signature 111 and the auxiliary SIG2ID task 115 are used to perform the machine unlearning according to the various embodiments described herein.

In one embodiment, the inputs of the ML model 103 are configured as follows. After joining the training, a new data provider/UE 101 first receives a signature 111 generated by the signature authority 113 (e.g., a trusted third party, model provider, etc.). This signature 111 is also sent to the model manager 123 (e.g., a central server, model trainer, etc.) to notify the existence of a new data provider/UE 101. Then, in each (re)training phase of the ML model 103, the UE 101 (e.g., data provider) sends the labeled input samples (e.g., input 117) appended with the i-th data provider's unique signature 111

$$\left( \left\{ x_j^i, y_j^i, s^1 \right\}_{(i=1)}^N, s^i \right)$$ to the trainer (e.g., model manager 123), where $\left\{ x_j^i, y_j^i, s^1 \right\}_{(i=1)}^N$ denotes the labeled data batch with an input sample $x^i \in X^i$ labeled with $y^i \in Y^i$ and $s^i$ denotes the signature of the i-th data provider (UE 101). $x^i$ is a vector representation of obtained data provider/UE data, whose format can be image, text, video, etc. The augmented input sample $\varkappa^i$ refers to the result of the vector addition of both the input sample and the signature $s^i$. Both the original data $\left\{ x_j^i, y_j^i \right\}_{(i=1)}^N$ coming from the i-th data provider ($1 \le i \le k$) and the augmented data $\left\{ \varkappa_j^i, y_j^i \right\}_{(i=1)}^N$ will be used to train the ML model 103 (DNN).

In one embodiment, the outputs of the ML model 103 can be configured as follows. As explained above, the DNN architecture as shown in FIG. 1 solves two tasks: the main task 109 and the auxiliary SIG2ID task 115. For each input x, the output of the main task 109 is a probability vector $\hat{y}_m$ with the dimension equal to the total number of classes (or labels). The element wise sum of $\hat{y}_m$ should be equal to 1. The predicted label is the index the vector that gives the highest probability value: $\hat{y}_m$argmax = $(\hat{y}_m)$. The performance of the ML model 103 on the main task 109 is measured by its accuracy and can be high (e.g., above a threshold accuracy) to demonstrate good performance. For example, accuracy can be calculated by dividing the correct number of predictions by the total number of predictions done on a test set. The auxiliary SIG2ID task 115 operates on the augmented data. For each signed input $\mathcal{X}$, the output of the auxiliary SIG2ID task 115 is again a probability vector $\hat{y}_s$ with the dimension equal to the number of data providers/UEs 101. In one embodiment, the predicted label in this case gives the correct user ID that matches with the signature $s^j$ used to augment the input.

In one embodiment, the training process for the ML model 103 can be configured as follows. The shared layers 125 of the architecture of the ML model 103 can be considered as a feature extractor that maps inputs to a latent feature space and parameterized by $\theta_F$. Then, the layers pertinent to the main task 109 maps latent space features into classes that the ML model 103 tries to learn with parameters $\theta_M$, and layers pertinent to auxiliary task 115 (SIG2ID) maps the same set of latent space features into user IDs, with parameters $\theta_S$. The training circuitry 401 trains the overall ML model 103 and optimize all parameters $\theta = (\theta_F, \theta_M, \theta_S)$ to minimize the loss function:

$L(\theta) = \alpha L_M(\theta_F + \theta_M) + \beta L_S(\theta_F + \theta_S) + \lambda_1 1 L_{Reg}(\theta_F + \theta_M) + \lambda_2 L_{Reg}(\theta_F + \theta_S)$

In one embodiment, the above loss function can include tunable coefficients (not shown above) for one or more of the terms. For example, each term can have a tunable coefficient which allow the adjustment of the importance of each component based on a given problem or dataset. In the above loss function, losses related to the main task are the first and third terms, i.e., $L_M(\theta_F + \theta_M)$ and $L_{Reg}(\theta_F + \theta_M)$, while losses related to the auxiliary SIG2ID task 115 are the second and fourth terms, i.e., $L_S(\theta_F + \theta_S)$ and $L_{Reg}(\theta_F + \theta_S)$. $L_M(\theta_F + \theta_M)$ refers to the classification loss for the main task 109 and it is minimized to make predicted classes closer to the ground truth values. $L_S(\theta_F + \theta_S)$ is the classification loss that is minimized for the auxiliary SIG2ID task 115. By way of example, classification loss functions such as cross entropy loss, additive margin SoftMax (AMS) loss, or equivalent can be used. In one embodiment, the training circuitry 401 can use cross entropy loss for the main task 109, and AMS for the auxiliary SIG2ID task 115. Finally, $L_{Reg}$ refers to the regularization term. Regularization can be used in continual learning to prevent catastrophic forgetting. There are two different regularization terms in the above equation:

$$(1)\ L_{Reg}(\theta_F + \theta_M)$$

can be used when a new class is added to the main task 109.

$$(3)\ L_{Reg}(\theta_F + \theta_S)$$

can be used when a new data provider/UE 101 joins the training.

It is contemplated that any regularization terms known in the art can be used according to the various embodiments described herein to the compute the regularization loss for both the main task 109 and auxiliary SID2ID task 115. The training circuitry 401 can use gradient based optimization techniques or equivalent to minimize the overall loss function and find optimal parameters. In one embodiment, the training circuitry 401 can use the original data (e.g., unsigned) to minimize the loss related to the main task 109, and augmented (e.g., signed) data for the auxiliary SIG2ID task 115.

As can be seen from the loss function, during model training, both $\theta_M$ and $\theta_S$ are optimized for their respective tasks while $\theta_F$ is optimized for both the main task 109 and auxiliary SIG2ID task 115. In some cases, this might result in the task interference problem discussed above, which is a common issue in MTL. In order to solve this problem and balance the learning of two tasks, the training circuitry 401 can use any mitigation techniques known in the art to be effective in MTL.

In one embodiment, the signature design can be configured as follows. As mentioned above, each data provider/UE 101 will receive a unique signature 111 and will append this signature 111 into every data stream received by the central server (e.g., model manager 123). In one embodiment, data providers/UEs 101 can authenticate themselves to the server every time they send a data stream. In one embodiment, the signature 111 can also be included in an unlearning request 121 to initiate machine unlearning later if a data provider/UE 101 wants to be removed from the system completely.

High similarity between signatures 111 might cause privacy issues, including leaking information about other signatures 111 or recovery by reverse engineering methods implemented by data providers/UEs 101 with malicious intents. Moreover, highly similar signatures can be likely to cause unwanted collisions due to overlapping latent space features and results in a poorly performing SIG2ID task. This makes machine unlearning (MU) quite challenging, since various embodiments of the MU procedure depend on finding model parameters that are sensitive to each data provider/UE 101 and specifically each signature 111. Therefore, in one embodiment, signatures are unique to each data provider/UE 101 and highly separated from each other. For example, signatures 111 that are highly separated from each other means that they have a low probability (e.g., below a probability threshold) of being confused with each other by the model or by an adversary. This implies that the signatures 111 have a high diversity and distinctiveness among themselves, and that they do not share common features or patterns that could be exploited to infer or reconstruct them. High separation between signatures 111 also means that they occupy different regions of the latent space, which facilitates the auxiliary SIG2ID task 115 and the machine unlearning process.

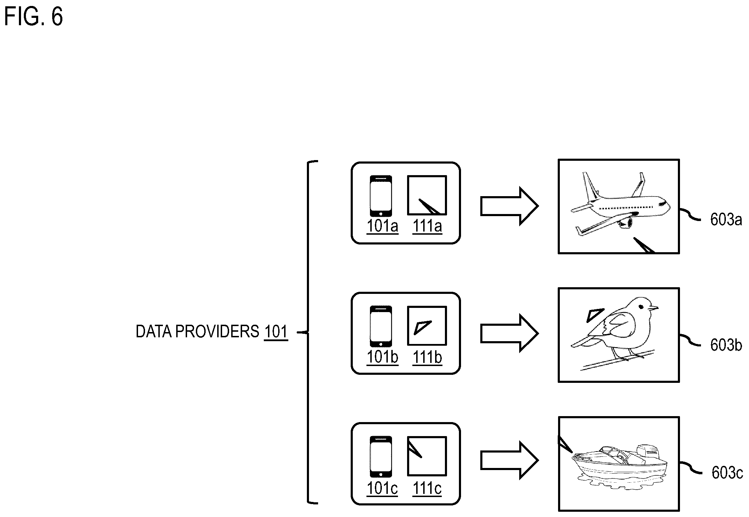

To this end, in one embodiment, the system 100 can generate a random pattern for each data provider/UE 101 joining the training using different seeds and saving those seeds after the pattern generation. For example, as shown in the example of FIG. 6, if the data from the data providers/UEs 101a-101c contain images, random patterns that are unique in terms of color, shape, orientation and position can be used as respective signature 111a-111c. Since the seed is just a number, it can be easily scaled to thousands or more data providers/UEs 101 easily. By way of example, the procedure is illustrated as follows:

(1) A new data provider/UE 101 wants to join the training.
(2) A trusted third party (e.g., signature authority 113) generates the signature 111 using a seed, which is different from previous seeds generated for other data providers/UEs 101 that have already joined the training.
(3) The trusted third party (e.g., signature authority 113) sends the generated signature 111 to both the data provider/UE 101 and the central server (e.g., model manager 123) that trains the ML model 103.
(4) The new data provider/UE 101 starts sending their labeled data (e.g., images 603a-603c), appended by the signature 111, to the central server (e.g., model manager 123).
(5) In addition or alternatively, the central server (e.g., model manager 123) can augment the data from the data providers/UEs 101 by adding respective signatures 111 to each data sample. In one embodiment, since the signature addition is a simple vector addition, this scenario can also be suited to when the input data is homomorphically encrypted. As noted above, examples of an augmented data samples with different signatures when the main task is image classification are shown in images 603a-603c.

In one embodiment, the unlearning circuitry 403 of the model manager 123 can perform the various embodiments of the machine unlearning (MU) procedure described herein. For example, the MU procedure starts when a data provider/UE 101 wants to leave the system and requests removing their information from the system via an unlearning request 121 or equivalent. For example, the data provider/UE 101 that wants to remove their information from the system sends an unlearning request 1121 to the central server (e.g., model manager 123) which notifies the signature authority 113 (e.g., a trusted third party). In one embodiment, the unlearning request 121 includes or other indicates at least the unique signature 111 corresponding to the data provider/UE 101 that is to be removed.

The proposed solution consists of calculating the most sensitive model parameters for that data provider using model parameters $\theta = (\theta_F, \theta_S)$ related for the auxiliary SIG2ID task 115, and then, for instance, adding a suppressive noise to those parameters.

In one embodiment, to perform data provider/UE level MU, model parameters that are sensitive to the leaving data provider/UE 101 (e.g., the model parameters that are mostly activated by that specific data provider/UE 101) are found via a Fisher Matrix Information or equivalent data structure representing a sensitivity metric as previously described above. In one embodiment, an FIM for each of one or more data providers/UEs 101 that have joined the training is calculated and updated during the learning process. FIM (F) is defined as the expected values of $i$-th and $j$-th model parameters with respect to the input sample x that is drawn from the distribution P(D) is calculated as:

$$F_{i,j} = E_{xP(D)} = \left[ \frac{L(x;\theta)}{\partial \theta_i}, \frac{L(x;\theta)}{\partial \theta_j} \right]$$

In this equation, $\partial$ refers to the gradient. The loss function is replaced with the losses related to the auxiliary SIG2ID task 115: $L_S(\theta_F + \theta_S)$ and $L_{Reg}(\theta_F + \theta_S)$. In one embodiment, a diagonal approximation can be applied for FIM computation, to reduce the computational cost and calculate the expected value using only the resulting user ID value that auxiliary SIG2ID task 115 gives as an output. By way of example, a diagonal approximation of a matrix is a simplification that assumes that the off-diagonal elements of the matrix are zero or negligible. This reduces the dimensionality and complexity of the matrix operations.

In summary, in process 503, the unlearning circuitry 403 comprises means for or performs a method comprising calculating at least one data structure representing a sensitivity of at least one parameter of the machine learning model to the training data associated with the least one data provider. In one embodiment, the at least one data structure is or otherwise represents a Fisher Information Matrix or equivalent sensitivity metric. In one embodiment, the at least one parameter is determined in one or more task layers associated with the auxiliary task, shared between the main task and the auxiliary task, or a combination thereof.

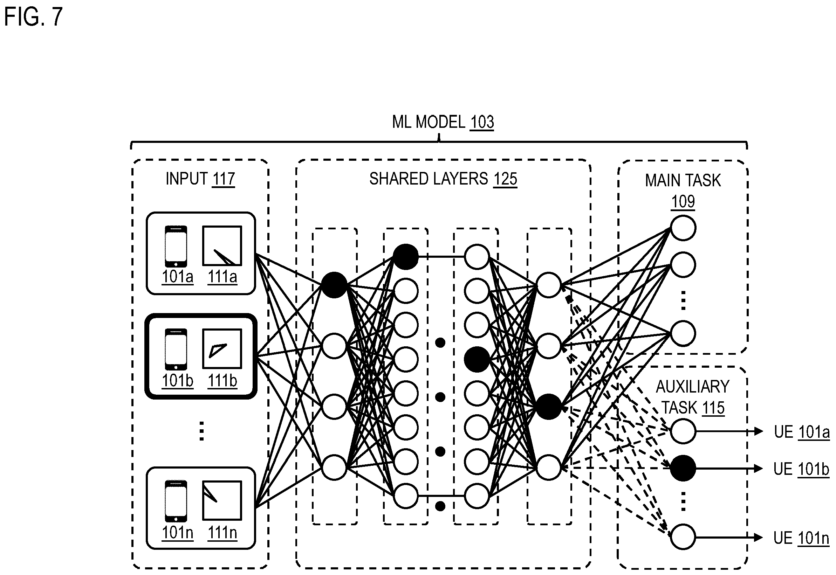

FIG. 7 is a diagram of a model undergoing machine unlearning, according to one example embodiment. In the example of FIG. 7, a data provider/UE 101b has requested that its data be unlearned from the ML model 103. In response, the unlearning circuitry 403 determines the parameters of the ML model 103 that are sensitive to the data of the requesting data provider/UE 101b using an FIM (or equivalent data structure representing a sensitivity metric) corresponding to the UE 101b constructed during model learning. As shown, the parameters indicated by dark circles are those that are sensitive to the UE 101b.

In one embodiment, after estimating the sensitivity for the forgetting and remaining user IDs, the unlearning circuitry 403 calculates the noise for the sensitive model parameters as:

$$\theta_i = \theta_i \pm \alpha_\eta \eta_i$$

where $\alpha_\eta$ is a coefficient and $\eta_i$ refers to the fraction of sensitivity of forgetting user ID to the remaining ones. Together $\alpha_\eta \eta_i$ is the calculated noise to suppress the sensitivity of parameter $\theta_i$ for the forgetting user ID.

In one embodiment, it is contemplated that the unlearning circuitry 403 can calculate the overall noise matrix using at least the following but not exclusive approaches:

(1) In each (re)training phase, the unlearning circuitry 403 uses the augmented data to calculate noise matrix for each data provider/UE 101 and saved for future MU procedures. After retraining and the noise matrix calculation, the unlearning circuitry 403 discards both the original and augmented data, as expected in continual learning setups.
(2) When a data provider/UE 101 requests to leave the system, the unlearning circuitry 403 calculates the whole noise matrix for each sensitive parameters with the respective signature added onto synthetically generated input samples.

In summary, in process 505, the unlearning circuitry 405 comprises means for or performs a method comprising updating one or more model parameters of the machine learning model based on the at least one data structure (e.g., representing an information/sensitivity metric) to perform a machine unlearning of the training data associated with the least one data provider indicated in an unlearning request. For example, the unlearning circuitry 403 comprises means for or performs a method comprising calculating a noise matrix using the auxiliary task, wherein the updating of the one or more model parameters of the machine learning model is by applying the noise matrix to the one or more model parameters.

In optional process 507, the verification circuitry 403 can perform MU verification to determine whether the requested MU is successful. In one embodiment, the MU process is successful when the resulting unlearned model is indistinguishable from the model trained on a dataset that does not include the data samples requested to be forgotten (i.e., forgotten samples). Since constructing the latter model may not be possible, feasible, or otherwise wanted, particularly in the case where there may be no available past training data, different metrics can be used to measure the effect of MU.

For example, the verification circuitry 405 can measure the accuracy of the forgotten samples to show the performance of the MU procedure by querying the unlearned model with the test samples augmented by the signature of the data provider leaving the system. In one embodiment, the verification circuitry 403 can determine the effectiveness of MU using membership inference (MI) attacks. In membership inference attacks, the goal is to find out whether a data sample is in the training set of the ML model 103 or not. The result of the attack gives a probability value between 0-100%. If the probability is higher than a designated threshold probability (e.g., 50%), there is a high chance that the data sample being tested is used in the training set. In addition or alternatively, a trusted third party or other component of the system 100 (besides the verification circuitry 403) implements the MI attack when the data provider/UE 101 wants to check if their data is removed from the training set.

In embodiments in which the model manager 123 performs the MU verification, the verification circuitry 405 comprises means for or performs a method comprising verifying a completeness of the unlearning based on querying the machine learning model after the unlearning using one or more test samples augmented with the at least one signature of the at least one data provider indicated in the unlearning request. In one embodiment, the querying of the machine learning model is based on a membership inference attack or equivalent as described above.

An example of a workflow of an MI attack for MU verification (as opposed to malicious purposes) is as follows:

(1) The data provider/UE 101 requests leaving the system and wants to be sure that their data is removed from the ML model 103. MU starts when a data provider/UE 101 sends an unlearning request 121 including at least its signature 111 to the model manager 123.

(2) The verification circuitry 405 or a trusted third party is notified of the unlearning request 121 and requests the API of the old (timestamped) model. The old model is the model before the machine unlearning process starts in order to verify that the effectiveness of MI attack on old model is higher compared to unlearned model.

(3) The data provider/UE 101 also has the option of MU verification. If the data provider/UE 101 requests MU verification, then they send a subset of their dataset or test samples to the trusted third party, appended by their signature 111.

(4) The trusted third party augments the dataset received by the data provider/UE 101 using the signature 111.

(5) The trusted third party implements the membership inference (MI) attack for both the original and unlearned ML model using the augmented dataset. The attack probability should be lower in the unlearned ML model when compared to the original ML model for the forgotten samples:

$$MI\left(unlearnedmodel, \{x_j^i, y_j^i\}_{j=1}^N\right) \ll MI\left(originalmodel, \{x_j^i, y_j^i\}_{j=1}^N\right)$$

In one embodiment, the MI attack can be conducted by comparing the performance of the original and unlearned ML models when performing the auxiliary task (e.g., signature prediction) and/or the main task of the models.

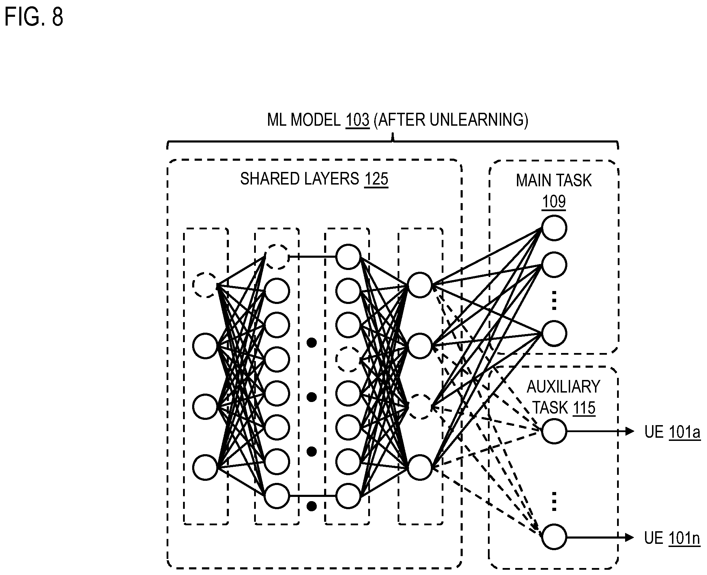

After data-level or data-provider/UE 101 level MU, the unlearned model may suffer from a small performance degradation and its test accuracy decreases, since it might remove both the forgotten samples and other samples close to them. FIG. 8 is a diagram of the ML model 103 with affected parameters after MU, according to one example embodiment. In the example of FIG. 8, the parameters of the ML model 103 that are indicated by dashed lines were most sensitive to the data of the data provider/UE 101b (e.g., no longer shown as a possible output of the auxiliary SIG2ID task 115) that was removed/unlearned from the system. The indicated parameters were subject to the noise matrix generated above to remove or reduce sensitivity to the data of the removed data provider/UE 101. As noted above, the application of the noise matrix may have also potentially affected the overall accuracy of the ML model 103 after learning.

To address this potential technical issue, after adding noise to sensitive parameters, the verification circuitry 405 can perform accuracy measurement of the ML model 103 after MU on a test data set. Then, if there is a significant decrease in the test accuracy (e.g., a decrease greater than a threshold level), then the unlearned ML model 103 is retrained with the next batch of data streams to recover its performance. The verification module 405, for instance, can calculate the difference between the accuracy of the original model and the unlearned model to evaluate the effect of MU to the main task 109. In addition to that, the recovery circuitry 407 can iteratively retrain the ML model 103 after unlearning on subsequent batches of training data to reach a similar level of test accuracy (e.g., relative to the ML model 103 before MU) or any other target level of accuracy as a metric to evaluate the recovery rate of the unlearned model. This iterative process, for instance, involves measuring unlearning verification and/or test accuracy, and repeating the recovery process (e.g., training on a new batch of data) until the verification and/or accuracy checks are satisfied.

In other words, the recovery circuitry 407 comprises means for or performs a method comprising training the machine learning model 103 on a new batch of training data after the unlearning. The new batch represents training data streams from the other data providers/UEs 101 remaining in the system and does not include data from the removed data provider/UE 101. In one embodiment, the training of the machine learning model on the new batch of training data is based on determining that an accuracy of the machine learning model 103 (e.g., with respect to the main task 109) is below a threshold level after the unlearning. In this way, if the ML model 103 after unlearning is still able to achieve an expected or target level of accuracy, then no recovery processes or extra retraining is needed with respect to the main task 109.

With respect to the auxiliary SIG2ID task 115, any output associated with the removed data provider/UE 101 is no longer valid. Thus, the number of data providers/UEs 101 in the training of the ML model 103 is decreased by the removed data provider/UE 101. Accordingly, in process 509, the recovery circuitry 407 comprises means for or performs a method comprising retraining one or more final layers of the machine learning model 103 associated with the auxiliary task 115 based on a new number of data providers remaining after the unlearning.

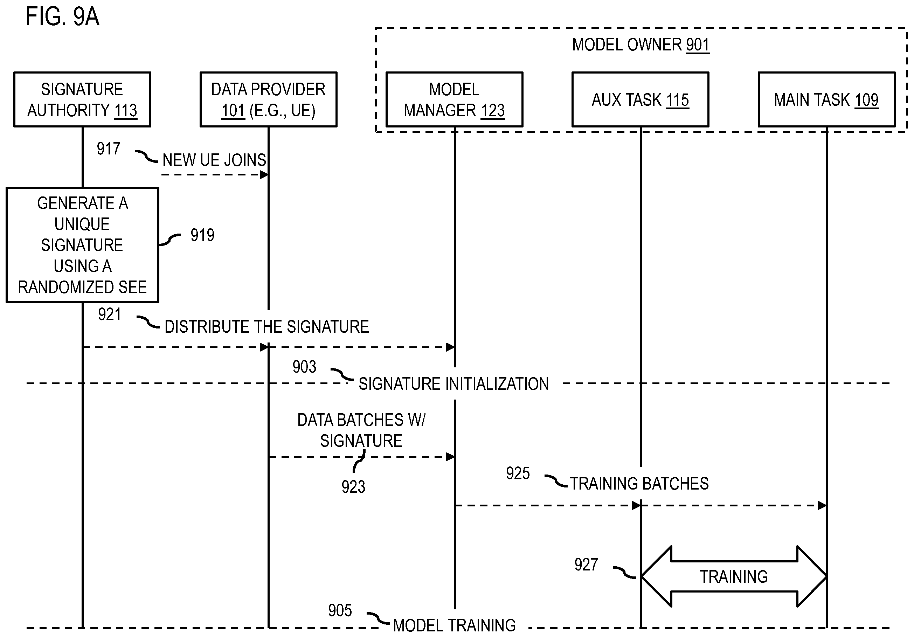

FIGs. 9A-9D summarize the overall machine unlearning process of the various embodiments described herein as a time-sequence diagram for signature-based unlearning for a continual model, according to one example embodiment. The processes represented in the example of FIGs. 9A-9D are signature authority 113, data provider/UE 101, model owner 901 comprising model manager 123, auxiliary task 115, and main task 109. For example, the data provider/UE 101 can send their request to model owner 901 through a predefined API. In addition to trained model (e.g., main task 109 and auxiliary SIG2ID task 115), there is the model manager 123 that is responsible for orchestrating the request at the end of model owner side. The signature authority 113 (e.g., a trusted third party) is responsible for signature generation as well as model unlearning verification in some embodiments. As presented in previous sections, the time-sequence diagram of FIGs. 9A-9D can be divided into: (1) signature initialization 903; (2) model training 905, (3) ML based services 907, (4) unlearning request 909; (5) machine unlearning 911, (5) machine unlearning verification 913, and (4) model recovery 915. The details of each section are described as follows.

As shown in FIG. 9A, in one embodiment of signature initialization 903, for every UE 101 that joins the system as a data provider (process 917), the signature authority 113 (e.g., a trusted third party) will generate a unique signature for the UE 101 (process 919). The generated signature is distributed to both new UE and model owner (process 921).

As shown in FIG. 9A, in one embodiment of model training 905, the input data (e.g., data batches) is collected by the model manager 123 from different UEs 111 appended with their signatures (process 923). The model manager 123 processes the input data into the required format and provides the data as training batches to main task 109 and auxiliary SIG2ID task 115 (process 925) and trains the ML model to learn each task with the training batches (process 927) as described above.

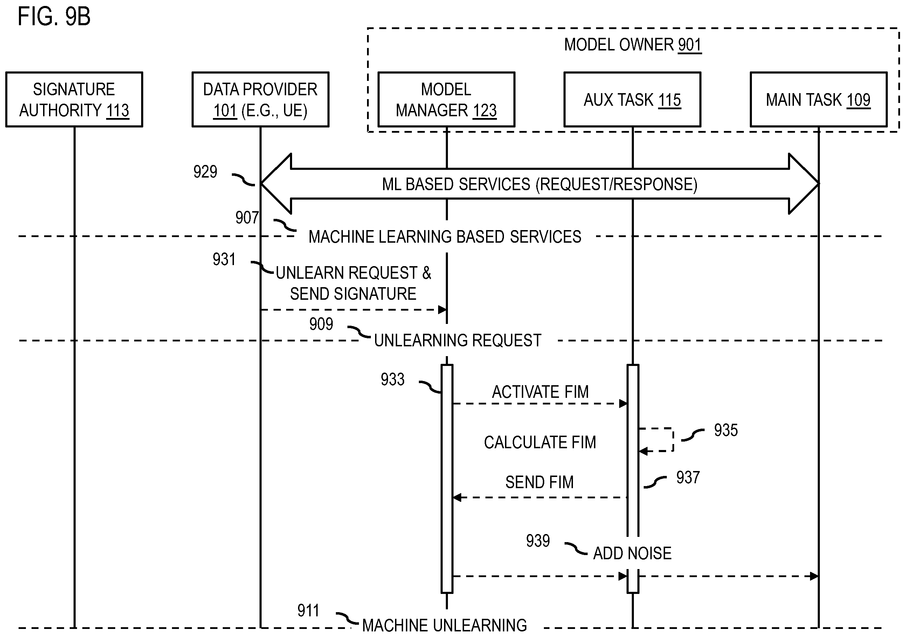

As shown in FIG. 9B, in one embodiment, ML based services 929 (e.g., via request/response using an API) will be provided to authorized UE 101 once the model training is ready.

As shown in FIG. 9B, in one embodiment, to initiate machine unlearning, a UE 101 can initiate a unlearning request 909. For example, a UE 101 that wants to be forgotten and remove its data from the trained model can send an unlearning request to the model manager 124, e.g., hosted by the model owner 901 or other provider (process 931). The unlearning request, for instance, includes at least a signature of the UE.

As shown in FIG. 9B, in one embodiment of machine unlearning 911, the model manager 123 activates the FIM on the model of the auxiliary SIG2ID task 115 with UE signature and UE ID (process 933). Activating, for instance, refers to retrieving the FIM for the requesting UE 101 from a data store of FIMs calculated during training of the auxiliary SIG2ID task 115 (process 935). The calculated FIM is then sent to the model manager 123 (process 937). Once completed, the model manager 123 updates the model parameters according to calculated FIM matrix by, e.g., adding noise to sensitive parameters of the model according to the various embodiments described previously (process 939).

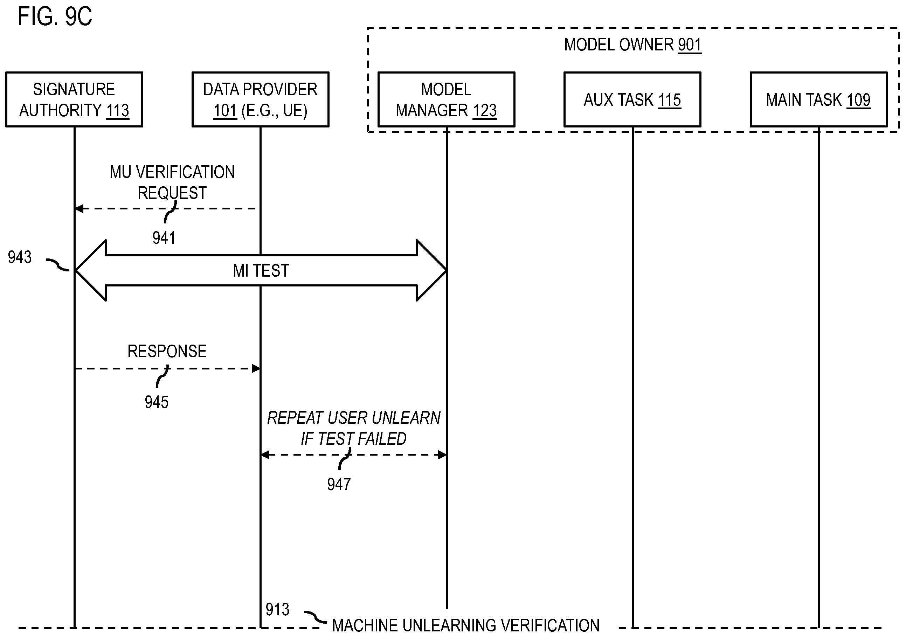

As shown in FIG. 9C, in one embodiment of model unlearning verification 913, the UE 101 sends a MU verification request to a trusted third party (e.g., signature authority 113) (process 941). A membership inference (MI) attack is conducted between the trusted third party (e.g., signature authority 113) and model owner 901 to test the completeness of model unlearn (process 943). The signature authority 113 provides a response indicating the results of the MI attack/test to the requesting UE 101 (process 945). The UE 101 can request that the model manager 123 repeat machine unlearning 911 if the MI test/verification fails (process 947).

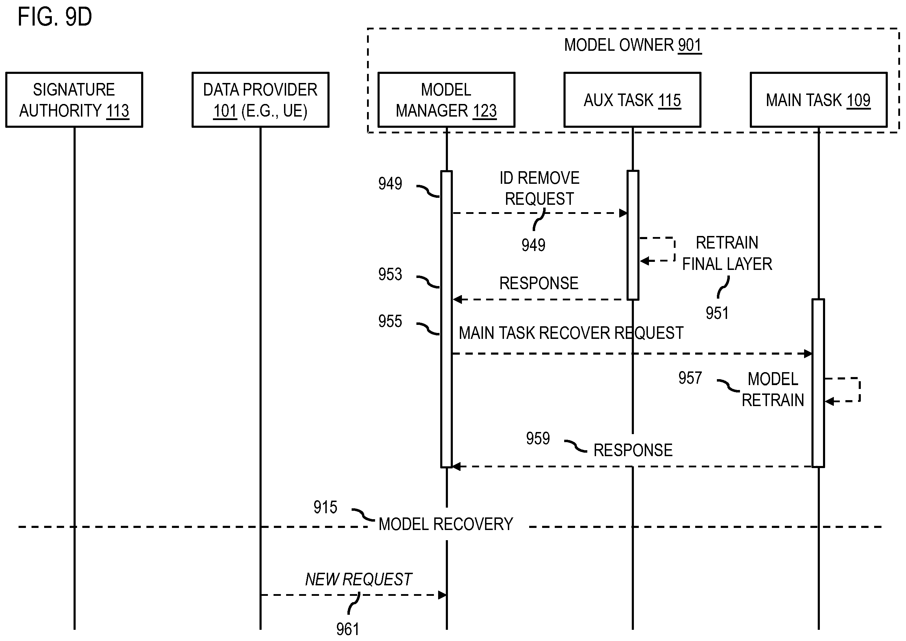

As shown in FIG. 9D, in one embodiment of model recovery 915, once machine unlearning 911 is completed (e.g., no matter if failed and succeeded), the model manager 123 initiates the model recovery process 915. For example, the model manager 123 initiates a request to remove the ID of the removed UE 101 from the output of the auxiliary SIG2ID task 115 (process 949). In response, the auxiliary SIG2ID task 115 retrains the final layer(s) specific to the SIG2ID task 115, maps the UE identification with new signature (process 951), and provides a response indicating the results of the retraining to the model manager 123 (process 953). The model manager 123 also sends a request to the main task 109 to initiate a model recovery (process 955). In response, the main task 109 recovers model accuracy by retraining the model with a next batch of UE data sample or synthetic samples (process 957) and provides a response indicating the results of the retraining to the model manager 123 (process 959). If the results of the retraining of the auxiliary task 115 and/or main task 109 fails, the model manager 123 can submit a new request to initiate model recovery 915 (process 961).

It is contemplated that the various embodiments described herein are a general solution that can be incorporated into any continual machine learning model that includes but is not limited to fields such as computer vision, cybersecurity, healthcare, robotics, etc. Two example use cases are provided below by way of illustration and not as limitations.

Use case 1 (privacy): The various embodiments described herein can be used for user/subscriber removal from ML based services from the privacy protection perspective. One example could be ML services using facial recognition to implement access control, surveillance, or person identification in social media (e.g., person tagging in Facebook). For instance, if a person wants to delete their social media app, they may want to remove all information provided to the app: removing images and all faces (e.g., both their faces and faces of their friends) tagged on those images used to train the facial recognition model. The various embodiments described herein can effectively resolve this request using only the e.g., username.

Use case 2 (efficiency): The various embodiments described herein can be used for malicious attack defense. In AI/ML based positioning, the positioning training data is normally collected from several base stations. When one base station is identified as malicious, the positioning ML model should remove the poisoned data from that base station to maintain high accuracy. Instead of repeating the whole training process from scratch with clean data, the various embodiments described herein for machine unlearning can efficiently sanitize the ML model and only requires the registered base station ID.

Returning to FIG. 1, in one example, the components of the system 100 may communicate over one or more communications networks 119 that includes one or more networks such as a data network, a wireless network, a telephony network, or any combination thereof. It is contemplated that the communications network 103 may be any local area network (LAN), metropolitan area network (MAN), wide area network (WAN), a public data network (e.g., the Internet), short range wireless communications network, or any other suitable packet-switched network, such as a commercially owned, proprietary packet-switched network, e.g., a proprietary cable or fiber-optic network, and the like, or any combination thereof. In addition, the communications network 103 may be, for example, a cellular telecom network and may employ various technologies including enhanced data rates for global evolution (EDGE), general packet radio service (GPRS), global system for mobile communications (GSM), Internet protocol multimedia subsystem (IMS), universal mobile telecommunications system (UMTS), worldwide interoperability for microwave access (WiMAX), Long Term Evolution (LTE) networks, 5G/3GPP (fifth-generation technology standard for broadband cellular networks / 3rd Generation Partnership Project) or any further generation, code division multiple access (CDMA), wideband code division multiple access (WCDMA), wireless fidelity (Wi-Fi), wireless LAN (WLAN), Bluetooth®, UWB (Ultra-wideband), Internet Protocol (IP) data casting, satellite, mobile ad-hoc network (MANET), and the like, or any combination thereof.

By way of example, the UE 101 can be any type of embedded system, mobile terminal, or portable terminal including a built-in navigation system, a personal navigation device, mobile handset, station, unit, device, multimedia computer, multimedia tablet, Internet node, communicator, laptop computer, notebook computer, netbook computer, tablet computer, personal communication system (PCS) device, personal digital assistants (PDAs), audio/video player, digital camera/camcorder, positioning device, fitness device, television receiver, radio broadcast receiver, electronic book device, game device, or any combination thereof, including the accessories and peripherals of these devices, or any combination thereof. It is also contemplated that the UE 101 can support any type of interface to the user (such as "wearable" circuitry, etc.).

In one example, the system 100 or any of its components may be a platform with multiple interconnected components (e.g., a distributed framework). The system 100 and/or any of its components may include multiple servers, intelligent networking devices, computing devices, components, and corresponding software for spatial-temporal authentication. In addition, it is noted that the system 100 or any of its components may be a separate entity, a part of the one or more services, a part of a services platform, or included within other devices, or divided between any other components.

By way of example, the components of the system 100 can communicate with each other and other components external to the system 100 using well known, new or still developing protocols. In this context, a protocol includes a set of rules defining how the network nodes, e.g. the components of the system 100, within the communications network interact with each other based on information sent over the communication links. The protocols are effective at different layers of operation within each node, from generating and receiving physical signals of various types, to selecting a link for transferring those signals, to the format of information indicated by those signals, to identifying which software application executing on a computer system sends or receives the information. The conceptually different layers of protocols for exchanging information over a network are described in the Open Systems Interconnection (OSI) Reference Model.

Communications between the network nodes are typically affected by exchanging discrete packets of data. The packets typically comprise (1) header information associated with a particular protocol, and (2) payload information that follows the header information and contains information that may be processed independently of that particular protocol. In some protocols, the packet includes (3) trailer information following the payload and indicating the end of the payload information. The header includes information such as the source of the packet, its destination, the length of the payload, and other properties used by the protocol. Often, the data in the payload for the particular protocol includes a header and payload for a different protocol associated with a different, higher layer of the OSI Reference Model. The header for a particular protocol typically indicates a type for the next protocol contained in its payload. The higher layer protocol is said to be encapsulated in the lower layer protocol. The headers included in a packet traversing multiple heterogeneous networks, such as the Internet, typically include a physical (layer 1) header, a data-link (layer 2) header, an internetwork (layer 3) header and a transport (layer 4) header, and various application (layer 5, layer 6 and layer 7) headers as defined by the OSI Reference Model.

The processes described herein for providing signature-based machine unlearning may be advantageously implemented via software, hardware (e.g., general processor, memory, input/output interface, etc.), firmware, circuitry, or a combination thereof. Such exemplary hardware for performing the described functions is detailed below.

FIG. 10 illustrates an example computer system 1000 upon which embodiments of the invention as described with the processes described herein may be implemented. The computer system 1000 is programmed (e.g., via computer program code or instructions) to provide signature-based machine unlearning as described herein and includes a communication mechanism such as a bus 1010 for passing information between other internal and external components of the computer system 1000. Information (also called data) is represented as a physical expression of a measurable phenomenon, typically electric voltages, but including, in other embodiments, such phenomena as magnetic, electromagnetic, pressure, chemical, biological, molecular, atomic, sub-atomic and quantum interactions. For example, north and south magnetic fields, or a zero and non-zero electric voltage, represent two states (0, 1) of a binary digit (bit). Other phenomena can represent digits of a higher base. A superposition of multiple simultaneous quantum states before measurement represents a quantum bit (qubit). A sequence of one or more digits constitutes digital data that is used to represent a number or code for a character. In some embodiments, information called analog data is represented by a near continuum of measurable values within a particular range.

A bus 1010 includes one or more parallel conductors of information so that information is transferred quickly among devices coupled to the bus 1010. One or more processors 1002 for processing information are coupled with the bus 1010.

A processor 1002 performs a set of operations on information as specified by computer program code related to providing signature-based machine unlearning. The computer program code is a set of instructions or statements providing instructions for the operation of the processor and/or the computer system to perform specified functions. The code, for example, may be written in a computer programming language that is compiled into a native instruction set of the processor. The code may also be written directly using the native instruction set (e.g., machine language). The set of operations includes bringing information in from the bus 1010 and placing information on the bus 1010. The set of operations also typically include comparing two or more units of information, shifting positions of units of information, and combining two or more units of information, such as by addition or multiplication or logical operations like OR, exclusive OR (XOR), and AND. Each operation of the set of operations that can be performed by the processor is represented to the processor by information called instructions, such as an operation code of one or more digits. A sequence of operations to be executed by the processor 1002, such as a sequence of operation codes, constitute processor instructions, also called computer system instructions or, simply, computer instructions. Processors may be implemented as mechanical, electrical, magnetic, optical, chemical or quantum components, among others, alone or in combination.

The computer system 1000 also includes a memory 1004 coupled to bus 1010. The memory 1004, such as a random access memory (RAM) or other dynamic storage device, stores information including processor instructions for providing signature-based machine unlearning. Dynamic memory allows information stored therein to be changed by the computer system 1000. RAM allows a unit of information stored at a location called a memory address to be stored and retrieved independently of information at neighboring addresses. The memory 1004 is also used by the processor 1002 to store temporary values during execution of processor instructions. The computer system 1000 also includes a read only memory (ROM) 1006 or other static storage device coupled to the bus 1010 for storing static information, including instructions, that is not changed by the computer system 1000. Some memory is composed of volatile storage that loses the information stored thereon when power is lost. Also coupled to bus 1010 is a non-volatile (persistent) storage device 1008, such as a magnetic disk, optical disk or flash card, for storing information, including instructions, that persists even when the computer system 1000 is turned off or otherwise loses power.

Information, including instructions for providing signature-based machine unlearning, is provided to the bus 1010 for use by the processor from an external input device 1012, such as a keyboard containing alphanumeric keys operated by a human user, or one or more sensors. In one embodiment, the computer system 1000 includes or otherwise has access to one or more sensors 1014 which detect conditions in its vicinity and transforms those detections into physical expression compatible with the measurable phenomenon used to represent information in the computer system 1000. Examples of sensors 1014 include but are not limited to cameras, Lidar, positioning sensors, gyroscopes, accelerometers, and/or the like. Other external devices coupled to bus 1010, include one or more actuators 1016. By way of example, an actuator is a device that converts electrical signals (e.g., control signals) into physical actions, such as movement, rotation, or force. In a mobile robot or equivalent drivetrain, an actuator 1016 can be used to control the wheels that enable the robot to perform various maneuvers. For example, an actuator 1016 can regulate the speed and direction of the wheels. Actuators 1016 can be powered by different sources, such as but not limited to electricity, pneumatic pressure, or hydraulic fluid. Some examples of actuators 1016 include but are not limited to motors, solenoids, cylinders, and servos. In some embodiments, for example, in embodiments in which the computer system 1000 performs all functions automatically without human input, one or more of external input device 1012, display device 1014 and pointing device 1016 is omitted. In various embodiments, the computer system 1000 is further connected via the bus 1010 to a one or more camera device, flash device or Lidar device.

Computer system 1000 also includes one or more instances of a communications interface 1070 coupled to bus 1010. Communication interface 1070 provides a one-way or two-way communication coupling to a variety of external devices that operate with their own processors, such as printers, scanners and external disks. In general, the coupling is with a network link 1078 that is connected to a local network 1080 to which a variety of external devices with their own processors are connected. In certain embodiments, the communications interface 1070 enables connection to the communications network 103 for providing signature-based machine unlearning.

The term computer-readable medium is used herein to refer to any medium that participates in providing information to processor 1002, including instructions for execution. Such a medium may take many forms, including, but not limited to, non-volatile media, volatile media and transmission media. Non-volatile media include, for example, optical or magnetic disks, such as storage device 1008. Volatile media include, for example, dynamic memory 1004. Transmission media include, for example, coaxial cables, copper wire, fiber optic cables, and carrier waves that travel through space without wires or cables, such as acoustic waves and electromagnetic waves, including radio, optical and infrared waves. Signals include man-made transient variations in amplitude, frequency, phase, polarization or other physical properties transmitted through the transmission media. Common forms of computer-readable media include, for example, any solid state medium, any magnetic medium, any optical medium, any physical medium, a RAM, any other memory chip, a carrier wave, or any other medium from which a computer can read.

Network link 1078 typically provides information communication using transmission media through one or more networks to other devices that use or process the information. For example, network link 1078 may provide a connection through local network 1080 to a host computer 1082 or to equipment 1084 operated by an Internet Service Provider (ISP). ISP equipment 1084 in turn provides data communication services through the public, world-wide packet-switching communications network of networks now commonly referred to as the Internet 1090.

A computer called a server host 1092 connected to the Internet hosts a process that provides a service in response to information received over the Internet. For example, server host 1092 hosts a process that provides information representing video data for presentation at display 1014. It is contemplated that the components of the system 100 can be deployed in various configurations within other computer systems, e.g., host 1082 and server 1092.

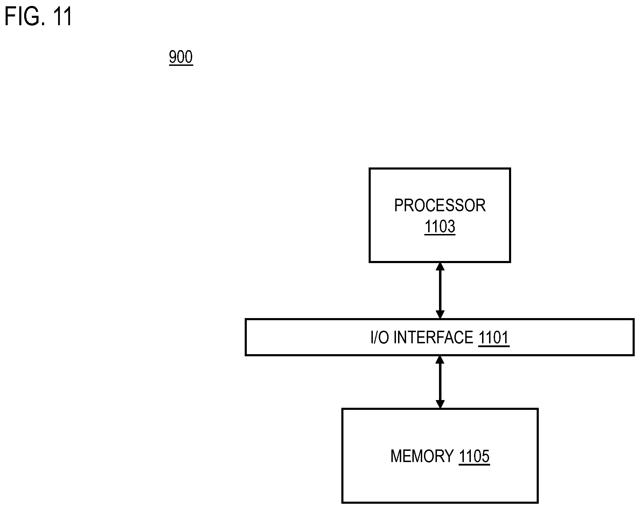

FIG. 11 illustrates a chip set 1100 upon which embodiments of the invention, for example, the components of system 100 may be implemented. The chip set 1100 is programmed to provide signature-based machine unlearning as described herein and includes, for instance, the processor and memory components described with respect to FIG. 5 incorporated in one or more physical packages (e.g., chips). By way of example, a physical package includes an arrangement of one or more materials, components, and/or wires on a structural assembly (e.g., a baseboard) to provide one or more characteristics such as physical strength, conservation of size, and/or limitation of electrical interaction. It is contemplated that in certain embodiments the chip set can be implemented in a single chip.

In one embodiment, the chip set 1100 includes a communication mechanism such as a input/output (I/O) interface 1101 for passing information among the components of the chip set 1100 and to external devices (e.g., sensors and/or actuators of a robot, transmitters/receivers for signaling a vehicle/robot/drivetrain or component thereof, etc.). A processor 1103 has connectivity to the bus 1101 to execute instructions and process information stored in, for example, a memory 1105. The processor 1103 may include one or more processing cores with each core configured to perform independently. A multi-core processor enables multiprocessing within a single physical package. Examples of a multi-core processor include two, four, eight, or greater numbers of processing cores. Alternatively or in addition, the processor 1103 may include one or more microprocessors configured in tandem via the bus 1101 to enable independent execution of instructions, pipelining, and multithreading. Other specialized components to aid in performing the inventive functions described herein include one or more field programmable gate arrays (FPGA) (not shown), one or more controllers (not shown), or one or more other special-purpose computer chips.

The processor 1103 and accompanying components have connectivity to the memory 1105 via the I/O interface 1101. The memory 1105 includes both dynamic memory (e.g., RAM, magnetic disk, writable optical disk, etc.) and static memory (e.g., ROM, CD-ROM, etc.) for storing executable instructions that when executed perform the inventive steps described herein to provide signature-based machine unlearning. The memory 1105 also stores the data associated with or generated by the execution of the inventive steps.

## Claims

1. An apparatus comprising:

   means for configuring a machine learning model to learn at least one main task and an auxiliary task, wherein the auxiliary task maps at least one signature associated with at least one data provider to at least one identifier associated with the at least one data provider, and wherein the machine learning model is trained using training data labeled with the at least one signature;
   means for calculating at least one data structure representing a sensitivity of at least one parameter of the machine learning model to the training data associated with the least one data provider; and
   means for updating one or more model parameters of the machine learning model based on the at least one data structure to perform a machine unlearning of the training data associated with the least one data provider indicated in an unlearning request.

2. The apparatus of claim 1, wherein the at least one data structure is a Fisher Information Matrix.

3. The apparatus according to any of claims 1-2, wherein the machine learning model is a continual learning model.

4. The apparatus according to any of claims 1-3, wherein the at least one parameter is determined in one or more task layers associated with the auxiliary task, shared between the main task and the auxiliary task, or a combination thereof.

5. The apparatus according to any of claims 1-4, further comprising:

   means for calculating a noise matrix using the auxiliary task,

wherein the updating of the one or more model parameters of the machine learning model is by applying the noise matrix to the one or more model parameters.

6. The apparatus according to any of claims 1-5, further comprising:
means for retraining one or more final layers of the machine learning model associated with the auxiliary task based on a new number of data providers remaining after the unlearning.

7. The apparatus according to any of claims 1-6, further comprising:
means for training the machine learning model on a new batch of training data after the unlearning.

8. The apparatus of claim 7, wherein the training of the machine learning model on the new batch of training data is based on determining that an accuracy of the machine learning model is below a threshold level after the unlearning.

9. The apparatus according to any of claims 1-8, further comprising:
means for verifying a completeness of the unlearning based on querying the machine learning model after the unlearning using one or more test samples augmented with the at least one signature of the at least one data provider indicated in the unlearning request.

10. The apparatus of claim 9, wherein the querying of the machine learning model is based on a membership inference attack.

11. The apparatus according to any of claims 1-10, wherein the training data includes image data, and wherein the at least one signature is at least one watermark in the image data.

12. A non-transitory computer-readable storage medium comprising program instructions that, when executed by an apparatus, cause the apparatus to:

configuring a machine learning model to learn at least one main task and an auxiliary task, wherein the auxiliary task maps at least one signature associated with at least one data provider to at least one identifier associated with the at least one data provider, and wherein the machine learning model is trained using training data labeled with the at least one signature;
calculating at least one data structure representing a sensitivity of at least one parameter of the machine learning model to the training data associated with the least one data provider; and
updating one or more model parameters of the machine learning model based on the at least one data structure to perform a machine unlearning of the training data associated with the least one data provider indicated in an unlearning request.

13. The non-transitory computer-readable storage medium of claim 12, wherein the at least one data structure is a Fisher Information Matrix.

14. A computer-implemented method comprising:

configuring a machine learning model to learn at least one main task and an auxiliary task, wherein the auxiliary task maps at least one signature associated with at least one data provider to at least one identifier associated with the at least one data provider, and wherein the machine learning model is trained using training data labeled with the at least one signature;
calculating at least one data structure representing a sensitivity of at least one parameter of the

machine learning model to the training data associated with the least one data provider; and updating one or more model parameters of the machine learning model based on the at least one data structure to perform a machine unlearning of the training data associated with the least one data provider indicated in an unlearning request.

15. The computer-implemented method of claim 14, wherein the at least one data structure is a Fisher Information Matrix.

# FIG. 1

# FIG. 2

DATA STREAMING

DATA STREAMING

DATA STREAMING

201

API 203

CONTINUAL MODEL TRAINING 209

API 207

REQUEST/ RESPONSE

REQUEST/ RESPONSE

REQUEST/ RESPONSE

DATA PROVIDERS/UEs 101 (E.G., USER DEVICES)

MODEL SERVICE SUBSCRIBERS 205

EP 4 687 078 A1

FIG. 3A

301

303a θ

303b θ

FIG. 3B

311

313a θ

313b θ

FIG. 4

MODEL MANAGER 123

TRAINING CIRCUITRY 401

UNLEARNING
CIRCUITRY 403

VERIFICATION
CIRCUITRY 405

RECOVERY
CIRCUITRY 407

EP 4 687 078 A1

FIG. 5

500

```
CONFIGURE MACHINE LEARNING MODEL
TO LEARN MAIN TASK AND AUXILIARY
TASK
```
501

```
CALCULATE FIM OR EQUIVALENT DATA
STRUCTURE INDICATING SENSITIVITY OF
MODEL PARAMETERS
```
503

```
IN RESPONSE TO UNLEARNING REQUEST,
UPDATE MODEL PARAMETERS TO
PERFORM UNLEARNING
```
505

```
OPTIONALLY PERFORM UNLEARNING
VERIFICATION
```
507

```
OPTIONALLY PERFORM MODEL
RECOVERY
```
509

EP 4 687 078 A1

FIG. 6

DATA PROVIDERS 101

101a  111a → 603a

101b  111b → 603b

101c  111c → 603c

FIG. 7

ML MODEL 103

INPUT 117

101a 111a

101b 111b

101n 111n

SHARED LAYERS 125

MAIN TASK 109

AUXILIARY TASK 115

UE 101a

UE 101b

UE 101n

EP 4 687 078 A1

FIG. 8

ML MODEL 103 (AFTER UNLEARNING)

SHARED LAYERS 125

MAIN TASK 109

AUXILIARY TASK 115

UE 101a

UE 101n

EP 4 687 078 A1

# FIG. 9A

**MODEL OWNER 901**

SIGNATURE AUTHORITY 113

DATA PROVIDER 101 (E.G., UE)

MODEL MANAGER 123

AUX TASK 115

MAIN TASK 109

917 — NEW UE JOINS

GENERATE A UNIQUE SIGNATURE USING A RANDOMIZED SEE — 919

921 — DISTRIBUTE THE SIGNATURE

903 — SIGNATURE INITIALIZATION

DATA BATCHES W/ SIGNATURE — 923

925 — TRAINING BATCHES

927 — TRAINING

905 — MODEL TRAINING

EP 4 687 078 A1

FIG. 9B

MODEL OWNER 901

SIGNATURE AUTHORITY 113

DATA PROVIDER 101 (E.G., UE)

MODEL MANAGER 123

AUX TASK 115

MAIN TASK 109

929 — ML BASED SERVICES (REQUEST/RESPONSE)

907 — MACHINE LEARNING BASED SERVICES

931 — UNLEARN REQUEST & SEND SIGNATURE

909 — UNLEARNING REQUEST

933 — ACTIVATE FIM

CALCULATE FIM — 935

SEND FIM — 937

939 — ADD NOISE

911 — MACHINE UNLEARNING

EP 4 687 078 A1

# FIG. 9C

MODEL OWNER _901_

SIGNATURE AUTHORITY _113_

DATA PROVIDER _101_ (E.G., UE)

MODEL MANAGER _123_

AUX TASK _115_

MAIN TASK _109_

MU VERIFICATION REQUEST

941

943

MI TEST

RESPONSE

945

REPEAT USER UNLEARN IF TEST FAILED

947

913 — MACHINE UNLEARNING VERIFICATION

EP 4 687 078 A1

# FIG. 9D

EP 4 687 078 A1

FIG. 10

EP 4 687 078 A1

FIG. 11

900

PROCESSOR
1103

I/O INTERFACE 1101

MEMORY 1105

| | Europäisches Patentamt European Patent Office Office européen des brevets | **EUROPEAN SEARCH REPORT** | **Application Number** EP 25 19 0058 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | GAOYANG LIU ET AL: "Federated Unlearning", ARXIV.ORG, CORNELL UNIVERSITY LIBRARY, 201 OLIN LIBRARY CORNELL UNIVERSITY ITHACA, NY 14853, 27 December 2020 (2020-12-27), XP081847230, * Sections: I, II.B, III.B, IV.A, IV.B, V.A * ----- | 1-15 | INV. G06N3/098 |
| A | YI LIU ET AL: "The Right to be Forgotten in Federated Learning: An Efficient Realization with Rapid Retraining", ARXIV.ORG, CORNELL UNIVERSITY LIBRARY, 201 OLIN LIBRARY CORNELL UNIVERSITY ITHACA, NY 14853, 14 March 2022 (2022-03-14), XP091190384, * Section V.B * ----- | 1-15 | |

TECHNICAL FIELDS SEARCHED (IPC)

G06N

The present search report has been drawn up for all claims

| Place of search | Date of completion of the search | Examiner |
|---|---|---|
| The Hague | 23 October 2025 | Baldan, Marco |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)